# EUROPEAN PATENT SPECIFICATION

(11) **EP 1 792 313 B1**
(45) Date of publication and mention of the grant of the patent: **23.07.2008**
(21) Application number: 05782786.7
(22) Date of filing: 08.09.2005
(51) Int. Cl.: G11B 19/20, G11B 17/028, G11B 7/095, G11B 33/12

(54) **OPTICAL DISC SYSTEM WITH AN ADJUSTABLE POSITION OF THE ROTATING DISC**
OPTISCHES PLATTENSYSTEM MIT EINSTELLBARER POSITION DER DREHENDEN PLATTE
SYSTEME DISQUE OPTIQUE DOTE D'UN DISQUE ROTATIF A POSITION REGLABLE

(30) Priority: 13.09.2004 EP 04104414
(43) Date of publication of application: 06.06.2007
(73) Proprietor: Koninklijke Philips Electronics N.V., 5621 BA Eindhoven (NL)
(72) Inventor: VERSCHUREN, Coen, A., NL-5656 AA Eindhoven (NL)
(74) Representative: Uittenbogaard, Frank
(86) International application number: PCT/IB2005/052937
(87) International publication number: WO 2006/030353

(56) References cited:
- US-A1- 2002 048 244
- US-A1- 2002 154 594
- PATENT ABSTRACTS OF JAPAN vol. 008, no. 042 (P-256), 23 February 1984 (1984-02-23) & JP 58 194181 A (ASAHI KOUGAKU KOGYO KK), 12 November 1983 (1983-11-12)

## Description

The invention relates to an optical disc system comprising a turntable and clamping means for clamping an optical disc against a surface of said turntable, and a drive motor connected to said turntable, wherein the axis of rotation of said turntable has a substantially perpendicular position with respect to the plane in which said surface of the turntable extends.

Such an optical disc system comprises an optical writing and/or reading device on which any type of optical disc-like storage medium can be used, such as CDs or DVDs or Blu-ray Discs. The term turntable is used to indicate the whole unit that holds the optical disc, which unit is driven by the drive motor. The optical disc system further comprises an optical pickup device for writing and/or reading information to and/or from the optical disc, the optical pickup device radially moving along the surface of the rotating optical disc.

US-A-2001/0015951 (cf the preamble of claims 1 and 8) discloses an optical disc system comprising a turntable having a central protrusion that fits in the central hole of an optical disc. In this system, the oscillation of the optical disc in the radial direction during rotation can be limited to an acceptable level. After the optical disc has been placed on the turntable around said central protrusion, with the central part of the optical disc abutting a flat surface of the turntable, clamping means approach the optical disc from the other side and push it against said flat surface of the turntable. The clamping means can be mounted on a portion of the optical disc system that can hinge with respect to the other portion of the system, to which the turntable is attached. By hinging said portion with respect to said other portion, the system can be opened and closed so as to insert or remove the optical disc in or from the turntable.

In another known optical disc system, the clamping means are incorporated in the turntable, so that no parts of the system approach the optical disc from the side opposite the side abutting the flat surface of the turntable. In this system, a central protrusion of the turntable, which protrusion fits in the central hole of the optical disc, can be provided with balls in its cylindrical surface, which balls are pushed radially outwards and abut the upper edge of the cylindrical inner surface of said central hole of the optical disc. The optical disc is thereby pushed against said flat surface of the turntable.

In general, it is desirable that the optical disc is clamped on the turntable in a correct and predetermined position, so that it moves in a flat plane during rotation, which plane extends radially with respect to the axis of rotation of the turntable. The optical pickup device can then move along its radially directed path, while the distance between the optical pickup device and the surface of the optical disc remains the same. However, there are several reasons why the optical disc may not rotate exactly in said flat radially directed plane. A first reason is the possible presence of unwanted particles of material on the turntable, so that the clamping means cannot push the optical disc correctly against the surface of the turntable, or that the optical disc is clamped incorrectly. In that case, the optical disc will be clamped in a tilting position with respect to the turntable. A second reason may be that the optical disc is not completely flat, but more or less warped. Both reasons may result in an axial oscillation of the edge of the optical disc during its rotation, as viewed from a stationary location, at which the oscillation frequency is equal to the rotational speed - expressed in revolutions per second - of the optical disc.

In prior-art optical disc systems, for example, as described in EP-A-0745980, a certain axial oscillation of the optical disc during rotation can be compensated by a tilt compensator in the optical pickup device. The described tilt compensator is an electrostriction device arranged in the optical path between the laser radiation source and the objective system of the optical pickup device. The optical pickup device is also provided with a tilt detector in order to detect tilt of the optical disc, i.e. axial oscillation of the surface of the optical disc. The output signal of the tilt detector is used to control the tilt compensator, which introduces a wavefront aberration in the radiation beam that compensates the coma caused by the tilt of the optical disc.

By making use of appropriate compensation means, small axial movements of the optical disc during rotation can be compensated, provided that the rotational speed of the optical disc is not too high. However, for several reasons it is desirable to minimize the axial oscillation of the outer edge of the optical disc during its rotation. The reliability of the information transfer between the optical pickup device and the optical disk will thus be improved, and the rotational speed of the optical disc can be increased.

It is an object of the invention to provide an optical system comprising a turntable and clamping means for clamping an optical disc against a surface of said turntable, wherein the axial oscillation of the edge of the optical disc is reduced during its rotation.

In order to achieve this object, adjustment means are present for adjusting said substantially perpendicular position of the axis of rotation of the turntable with respect to the plane in which said surface of the turntable extends. The substantially radially extending surface of the turntable can be positioned at a predetermined angle with respect to the radial plane being positioned perpendicularly to the axis of rotation of the turntable. The angle to be adjusted can be determined by means of a stationary sensor (detector) near the outer edge of the rotating optical disc, which sensor measures the axial oscillation of the surface of the optical disc. Such a sensor is, for example, an infrared sensor measuring the distance to the near surface of the optical disc. Said surface of the turntable is preferably substantially flat.

The position of said plane, in which said surface of the turntable extends, can be adjusted by means of a forward control. The axial oscillation of the rotating optical disc near its outer edge is measured and, based on this measurement, the desired tilt of the surface of the turntable is determined and subsequently adjusted accordingly. The position of said plane can also be adjusted by means of a feedback control, with which said oscillation is measured continuously, and said adjustment means change the tilt of said plane until the measured oscillation is minimal.

Such an adjustment of the position of the flat surface of the turntable can be performed by several means, for example, electro-mechanical means incorporated in the structure of the turntable unit, as will be further elucidated hereinafter with reference to the drawing.

An optical disc system whereby the turntable can move with respect to the rotating shaft of the drive motor is described in US-A-2002/154594. Thereby, the angle between the support surface of the turntable and the direction of the rotational axis cannot be adjusted, but can freely vary. After the rotational speed is fast enough, the disc will automatically take a position whereby its plane is substantially perpendicular to the axis of rotation. However, below that speed the disc will oscillate in an uncontrolled way, whereby for example the signal pick-up unit can be hit and damaged. Furthermore, the disc drive system described in this publication can only be used in stationary applications, and not in an apparatus that moves, for example an apparatus in a vehicle or a portable apparatus. In case the apparatus would move during rotation of the disc, the angle between the shaft of the drive motor and the plane of the disc will vary, because the rotating disc will function as a gyroscope due to its rotational speed and therefore maintain its position.

In a preferred embodiment, in which said turntable is attached to the output shaft of the drive motor, the adjustment means can tilt said surface of the turntable with respect to said output shaft. The turntable preferably comprises two parts, a first part comprising said flat surface, and a second part being attached to said output shaft, while said adjustment means can adjust the position of said first part with respect to the position of said second part. Said adjustment means may comprise devices for adjusting the mutual distance between said two parts.

In most optical disc systems, the turntable is attached to the output shaft of the drive motor, so that a very simple structure can be obtained. The clamping means can be between said two parts of the turntable, which devices are present at different locations incorporated in the turntable but may also be a part of a hinging portion of the system, in which the motor and the remainder of the turntable is part of a stationary portion of the system. By hinging said portion of the system, the system can be opened to insert or remove an optical disc.

In another preferred embodiment, at least a portion of the turntable is mounted in a portion of the system that can hinge with respect to the portion of the system in which the drive motor is mounted, while said adjustment means are present in said portion of the system that can hinge. Said portion of the turntable preferably comprises two parts, a first part comprising said flat surface, and a second part being connected to the drive motor, while said adjustment means can adjust the position of said first part with respect to the position of said second part.

Also in this embodiment, said adjustment means preferably comprise devices for adjusting the mutual distance between said two parts of the turntable, which devices are present at different locations between said two parts.

The invention also relates to a method of adjusting the position of an optical disc which rotates in an optical disc system comprising a turntable and clamping means for clamping the optical disc against a preferably substantially flat surface of said turntable, in which system a drive motor drives said turntable, and the axis of rotation of said turntable has a substantially perpendicular position with respect to the plane in which said surface of the turntable extends, said substantially perpendicular position of said axis being adjusted with respect to said plane in order to tilt the plane in which the optical disc rotates.

The invention will now be further elucidated by means of a description of an example of an optical disc system according to the invention, in which the angle between the axis of rotation of the turntable and the plane in which the surface of the turntable extends can be adjusted, and in which reference is made to the drawing comprising Figures which are only schematic representations.
Fig. 1 shows a turntable with an optical disc and the angle α to be adjusted, and
Fig. 2 shows a turntable comprising adjustment means for adjusting the angle α shown in Figure 1.

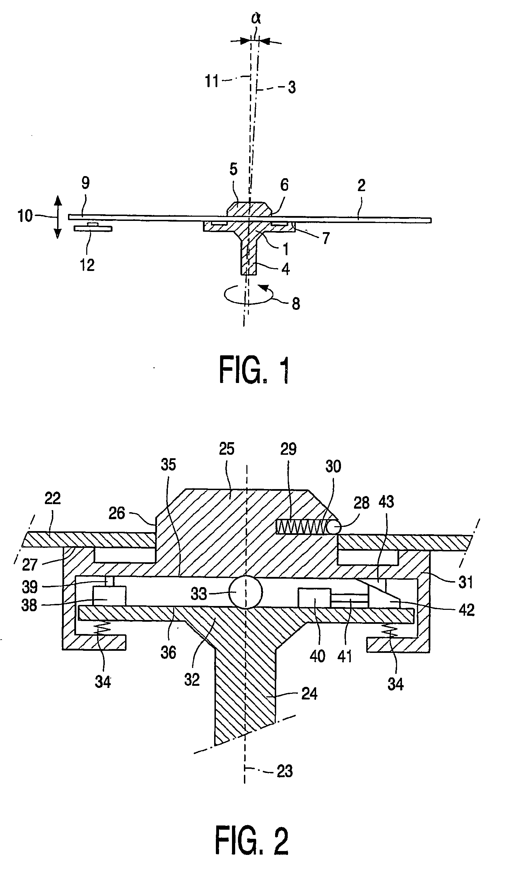

Figure 1 is a sectional view of a turntable 1 of a system for reading and writing information from/on a rotating optical disc 2. The turntable 1 rotates around an axis of rotation 3, which is indicated by a dot-and-dash line. The axis 3 is the axis of rotation of a drive motor (not shown) having an output shaft 4 to which the turntable 1 is attached. Turntable 1 is provided with a central protrusion 5 having a cylindrical surface 6 which fits in the central hole of the optical disc 2. The turntable 1 also has a surface 7 and clamping means to push the optical disc 2 against the surface 7. These clamping means are not shown in Figure 1, but will be elucidated hereinafter with reference to Figure 2. In the depicted embodiment, the surface is annular and flat. In Figure 1, arrow 8 indicates the rotation of turntable 1, together with optical disc 2, around the axis of rotation 3.

If the optical disc 2 is completely flat and correctly abuts the annular flat surface 7 of the turntable 1, the optical disc 2 will rotate in a flat plane extending perpendicularly to the axis of rotation 3. However, in practice, the optical 2 disc does not always rotate in a flat plane, for example, when it is not flat but warped, or when it does not correctly abut the annular flat surface 7.

In such cases, the outer edge 9 of the optical disc 2 will oscillate in the axial direction during rotation, which oscillation is indicated by arrow 10. This oscillation often has a frequency which is equal to the rotational speed (in revolutions per second) of the turntable 1, which means that the optical disc 2 is substantially positioned in a plane which is not exactly perpendicular to the axis of rotation 3. Said plane deviates by an angle α from a plane which is perpendicular to said axis of rotation 3. In Figure 1, angle α is indicated as the angle between the axis of rotation 3 and the broken line 11 which is perpendicular to the optical disc 2.

Figure 1 further shows an optical pickup device 12 which can move radially with respect to the rotating optical disc 2, i.e. from left to right in the plane of Figure 1, and vice versa. For a correct reading and writing operation by the optical pickup device 12, it is important that its distance to the surface of the optical disc 2 does not vary too much during its rotation. Only a limited variation of the distance between the optical pickup device 12 and the rotating optical disc 2 can be compensated by compensation means in the optical pickup device 12.

If the optical disc 2 has a diameter of 12 cm, a tilt angle α of 0.1 ° (see Figure 1) results in an axial movement of 0.33 mm at the edge 9 of the optical disc 2. Such an oscillation is rather large and it is therefore not always possible to compensate it by compensation means in the optical pickup device 12, in particular when the laser spot that is focused on the optical disc 2 has a relatively small size and/or the optical disc 2 has a relatively high rotational speed, both in order to increase the information density to be recorded or read.

Figure 2 shows schematically a turntable provided with an optical disc 22 clamped on it, both in a sectional view. The turntable can rotate around an axis of rotation 23, which is the axis of rotation of a drive motor (not shown) having an output shaft 24 to which the turntable is attached. The turntable is provided with a central protrusion 25 having a cylindrical surface 26 which fits in the central hole of the optical disc 22. The optical disc 22 abuts an annular flat surface 27 engaging the optical disc 22 by means of a number of balls 28 being mounted in the cylindrical surface 26 of protrusion 25. To this end, the protrusion 25 is provided with three or more radially directed bores 29 that are distributed around said cylindrical surface 26. Each bore 29 comprises a ball 28 which is biased by a helical spring 30, so that it can push against the upper edge of the cylindrical inner surface of the optical disc 22 so as to cause it to engage the annular flat surface 27 of the turntable. The ball 28 is prevented from being pushed out of the bore 29 by a deformation (not shown in Figure 2) of the edge of the bore 29.

Said protrusion 25 and said annular flat surface 27 are portions of a first part 31 of the turntable. The optical disc 22 is attached to the first part 31. The first part 31 is connected to a second part 32 of the turntable. The second part 32 is fixed to the output shaft 24 of the drive motor. Both parts 31, 32 can tilt a little with respect to each other. To this end, the two parts 31, 32 abut two opposite sides of a ball 33 and are pushed towards the ball 33 by means of a number of push springs 34. Around ball 33, the first part 31 of the turntable has a flat surface 35 extending in a substantially radial direction, and part 32 of the turntable has a flat surface 36 extending in the radial direction. Between the two surfaces 35, 36, there are two or more adjustment members for adjusting the mutual distance between the two surfaces 35, 36 at the location of the respective adjustment members.

Two different embodiments of an adjustment member are diagrammatically represented as examples in Figure 2. Both adjustment members are provided with an electrically controlled actuator, which may be an electric motor, an electro-magnetic actuator, or a piezo-electric actuator. The first embodiment of an adjustment member is represented at the left side between the two surfaces 35, 36. It comprises an actuator 38, which is attached to surface 36, and a moving element 39, which is attached to surface 35. The actuator 38 can move the moving element 39 inwardly and outwardly, so that the distance between the two surfaces 35, 36 at the location of the adjustment member can be varied.

The second embodiment of an adjustment member is represented at the right side between the two surfaces 35, 36. This embodiment comprises an actuator 40 which is attached to surface 36. The actuator 40 can move a shaft 41 to the left and right (in Figure 2), so that a wedge-shaped element 42 moves across surface 36 in the plane of the Figure. Another wedge-shaped element 43 is attached to surface 35 and abuts the inclined surface of element 42, so that movement of the wedge-shaped element 42 will result in a change of the distance between the two surfaces 35, 36 at the location of the adjustment member.

If two adjustment members are present between the two surfaces 35, 36 and if they are located at a mutual rotational angle of 90°, the tilt angle between the two parts 31, 32 of the turntable can be adjusted in the desired direction.

The adjustment members are controlled by an electric signal coming from detection means for measuring the axial oscillation of the edge 9 of the optical disc 2 (see Figure 1). The electric signal can be supplied to the adjustment members by means of electric wires through part 32 of the turntable, with sliding contacts (not shown in Figure 2) being present at the shaft 24 of said part 32.

The embodiment described above is merely an example of an optical system; a great many other embodiments are possible.

## Claims

1. An optical disc system comprising a turntable and clamping means (28,30) for clamping an optical disc (22) against a surface (27) of said turntable, and a drive motor connected to said turntable, wherein the axis of rotation (23) of said turntable has a substantially perpendicular position with respect to the plane in which said surface (27) of the turntable extends, **characterized in that** adjustment means (38,39;40,41,42,43) are present for adjusting said substantially perpendicular position of said axis (23) with respect to said plane.

2. An optical disc system as claimed in claim 1, wherein said turntable is attached to the output shaft (24) of said drive motor, **characterized in that** said adjustment means can tilt said surface (27) of the turntable with respect to said output shaft (24).

3. An optical disc system as claimed in claim 2, **characterized in that** the turntable comprises two parts (31,32), a first part (31) comprising said flat surface (27), and a second part (32) being attached to said output shaft (24), whereby said adjustment means can adjust the position of said first part (31) with respect to the position of said second part (32).

4. An optical disc system as claimed in claim 3, **characterized in that** said adjustment means comprise devices (38,39;40,41,42,43) for adjusting the mutual distance between said two parts (31,32) of the turntable, which devices are present at different locations between said two parts (31,32).

5. An optical disc system as claimed in claim 1, wherein at least a portion of the turntable is mounted in a portion of the system that can hinge with respect to the other portion of the system, in which other portion the drive motor is mounted, **characterized in that** said adjustment means (38,39;40,41,42,43) are present in said portion of the system that can hinge.

6. An optical disc system as claimed in claim 5, **characterized in that** said portion of the turntable comprises two parts (31,32), a first part (31) comprising said flat surface (27) and a second part (32) being connected to the drive motor, and wherein said adjustment means can adjust the position of said first part (31) with respect to the position of said second part (32).

7. An optical disc system as claimed in claim 6, **characterized in that** said adjustment means comprise devices (38,39;40,41,42,43) for adjusting the mutual distance between said two parts (31,32) of the turntable, which devices are present at different locations between said two parts (31,32).

8. A method of adjusting the position of an optical disc (22) which rotates in an optical disc system comprising a turntable and clamping means (28,30) for clamping the optical disc (22) against a surface (27) of said turntable, in which system a drive motor drives said turntable, and the axis of rotation (23) of said turntable has a substantially perpendicular position with respect to the plane in which said surface (27) of the turntable extends, **characterized in that** said substantially perpendicular position of said axis (23) is adjusted with respect to said plane after a disc is placed on the turntable.

## Patentansprüche

1. Optisches Plattensystem mit einem Plattenteller und mit Klemmmitteln (28, 30) zum Festklemmen einer optischen Platte (22) gegen einer Oberfläche (27) des genannten Plattentellers, und mit einem Antriebsmotor, der mit dem genannten Plattenteller verbunden ist, wobei die Drehungsachse (23) des genannten Plattentellers gegenüber der Ebene, in der die genannte Oberfläche (27) des Plattentellers sich befindet, eine im Wesentlichen senkrechte Lage einnimmt, **dadurch gekennzeichnet, dass** Einstellmittel (38, 39; 40, 41, 42, 43) zum Einstellen der genannten im Wesentlichen senkrechten Lage der genannten Achse (23) gegenüber der genannten Ebene vorgesehen sind.

2. Optisches Plattensystem nach Anspruch 1, wobei der genannte Plattenteller an der Ausgangsachse (24) des genannten Antriebsmotors befestigt ist, **dadurch gekennzeichnet, dass** die genannten Einstellmittel die genannte Oberfläche (27) des Plattentellers gegenüber der Ausgangsachse (24) lüften können.

3. Optisches Plattensystem nach Anspruch 2, **dadurch gekennzeichnet, dass** der Plattenteller zwei Teile (31, 32) umfasst, wobei ein erster Teil (31) die genannte ebene Oberfläche (27) aufweist, und wobei ein zweiter Teil (32) an der genannten Ausgangsachse (24) befestigt ist, wobei die genannten Einstellmittel die Lage des genannten ersten Teils (31) gegenüber der Lage des genannten zweiten Teiles (32) einstellen können.

4. Optisches Plattensystem nach Anspruch 3, **dadurch gekennzeichnet, dass** die genannten Einstellmittel Vorrichtungen (38, 39; 40, 41, 42, 43) zum Einstellen des Abstandes zwischen den genannten zwei Teilen (31, 32) des Plattentellers aufweisen, wobei diese Vorrichtungen an unterschiedlichen Stellen zwischen den genannten zwei Teilen (31, 32) vorhanden sind.

5. Optisches Plattensystem nach Anspruch 1, wobei wenigstens ein Teil des Plattentellers in einem Teil des Systems vorgesehen ist, der gegenüber dem anderen Teil des Systems gelenkig ist, wobei in dem anderen Teil der Antriebsmotor vorgesehen ist, **dadurch gekennzeichnet, dass** die genannten Einstellmittel (38, 39; 40, 41, 42, 43) in demjenigen Teil des Systems vorgesehen sind, der gelenkig ist.

6. Optisches Plattensystem nach Anspruch 5, **dadurch gekennzeichnet, dass** der genannte Teil des Plattentellers zwei Teile (31, 32) aufweist, wobei ein erster Teil (31) die genannte ebene Oberfläche (27) aufweist, und ein zweiter Teil (32) mit dem Antriebsmotor verbunden ist, und wobei die genannten Einstellmittel die Lage des genannten ersten Teils (31) gegenüber der Lage des genannten zweiten Teils (32) einstellen können.

7. Optisches Plattensystem nach Anspruch 6, **dadurch gekennzeichnet, dass** die genannten Einstellmittel Vorrichtungen (38, 39; 40, 41, 42, 43) zum Einstellen des Abstandes zwischen den genannten zwei Teilen *31, 32) des Plattentellers aufweisen, wobei diese Vorrichtungen an unterschiedlichen Stellen zwischen den genannten zwei Teilen (31, 32) vorhanden sind.

8. Verfahren zum Einstellen der Lage einer optischen Platte (22), die in einem optischen Plattensystem mit einem Plattenteller und mit Klemmmitteln (28, 30) zum Festklemmen der optischen Platte (22) gegen einer Oberfläche (27) des genannten Plattentellers, sich dreht, wobei in diesem System ein Antriebsmotor den genannten Plattenteller antreibt, und wobei die Drehungsachse (23) des genannten Plattentellers gegenüber der Ebene, in der sich die genannte Oberfläche (27) des Plattentellers sich befindet, eine im Wesentlichen senkrechte Lage hat, **dadurch gekennzeichnet, dass** die genannte im Wesentlichen senkrechte Lage der genannten Achse (23) gegenüber der genannten Ebene erst dann eingestellt wird, nachdem eine Platte auf den Plattenteller aufgelegt worden ist.

## Revendications

1. Système de disque optique comprenant une platine et des moyens de serrage (28, 30) pour serrer un disque optique (22) contre une surface (27) de ladite platine et un moteur d'entraînement qui est raccordé à ladite platine, dans lequel l'axe de rotation (23) de ladite platine présente une position sensiblement perpendiculaire au plan dans lequel s'étend ladite surface (27) de la platine, **caractérisé en ce que** des moyens de réglage (38, 39; 40, 41, 42, 43) sont présents pour régler ladite position sensiblement perpendiculaire dudit axe (23) par rapport audit plan.

2. Système de disque optique selon la revendication 1, dans lequel ladite platine est fixée à l'arbre de sortie (24) dudit moteur d'entraînement, **caractérisé en ce que** lesdits moyens de réglage peuvent incliner ladite surface (27) de la platine par rapport audit arbre de sortie (24).

3. Système de disque optique selon la revendication 2, **caractérisé en ce que** la platine comprend deux parties (31, 32), une première partie (31) comprenant ladite surface plane (27) et une deuxième partie (32) étant fixée audit arbre de sortie (24), cas dans lequel lesdits moyens de réglage peuvent régler la position de ladite première partie (31) par rapport à la position de ladite deuxième partie (32).

4. Système de disque optique selon la revendication 3, **caractérisé en ce que** lesdits moyens de réglage comprennent des dispositifs (38, 39; 40, 41, 42, 43) pour régler la distance mutuelle entre lesdites deux parties (31, 32) de la platine, lesquels dispositifs se situent à des emplacements différents entre lesdites deux parties (31, 32).

5. Système de disque optique selon la revendication 1, dans lequel au moins une partie de la platine est montée dans une partie du système qui peut s'articuler par rapport à l'autre partie du système, autre partie dans laquelle le moteur d'entraînement est monté, **caractérisé en ce que** lesdits moyens de réglage (38, 39; 40, 41, 42, 43) se situent dans ladite partie du système qui peut s'articuler.

6. Système de disque optique selon la revendication 5, **caractérisé en ce que** ladite partie de la platine comprend deux parties (31, 32), une première partie (31) comprenant ladite surface plane (27) et une deuxième partie (32) étant raccordée au moteur d'entraînement, et dans lequel lesdits moyens de réglage peuvent régler la position de ladite première partie (31) par rapport à la position de ladite deuxième partie (32).

7. Système de disque optique selon la revendication 6, **caractérisé en ce que** lesdits moyens de réglage comprennent des dispositifs (38, 39; 40, 41, 42, 43) pour régler la distance mutuelle entre lesdites deux parties (31, 32) de la platine, lesquels dispositifs se situent à des emplacements différents entre lesdites deux parties (31, 32).

8. Procédé de réglage de la position d'un disque optique (22) qui tourne dans un système de disque optique comprenant une platine et des moyens de serrage (28, 30) pour serrer le disque optique (22) contre une surface (27) de ladite platine, système dans lequel un moteur d'entraînement entraîne ladite platine, et l'axe de rotation (23) de ladite platine présente une position sensiblement perpendiculaire par rapport au plan dans lequel s'étend ladite surface (27) de la platine, **caractérisé en ce que** ladite position sensiblement perpendiculaire dudit axe (23) est réglée par rapport audit plan après le placement d'un disque sur la platine.
